## Europäisches Patentamt

## European Patent Office

## Office européen des brevets

(19)

(11) Numéro de publication : **0 029 763**
**B1**

(12) # FASCICULE DE BREVET EUROPÉEN

(45) Date de publication du fascicule du brevet :
26.09.84

(51) Int. Cl.³ : **B 60 N   1/06**, A 47 C   1/025

(21) Numéro de dépôt : **80401559.2**

(22) Date de dépôt : **31.10.80**

(54) **Siège de véhicule à inclinaison réglable, comprenant une ossature en coque.**

(30) Priorité : **14.11.79 FR 7928118**

(43) Date de publication de la demande :
**03.06.81 Bulletin 81/22**

(45) Mention de la délivrance du brevet :
**26.09.84 Bulletin 84/39**

(84) Etats contractants désignés :
**BE DE GB IT NL SE**

(56) Documents cités :
**FR-A- 2 106 757**
**FR-A- 2 178 517**
**US-A- 1 970 577**
**US-A- 2 299 538**
**US-A- 2 430 604**

(73) Titulaire : **SOCIETE INDUSTRIELLE BERTRAND
FAURE**
**Brières les Scellés**
**F-91150 Etampes (FR)**

(72) Inventeur : **Boisset, Bernard**
**4, Clos de Montfaucon**
**F-91150 Etampes (FR)**

(74) Mandataire : **Behaghel, Pierre et al**
**CABINET PLASSERAUD 84 rue d'Amsterdam**
**F-75009 Paris (FR)**

Jouve, 18, rue St-Denis, 75001 Paris, France

## Description

L'invention est relative aux sièges de véhicules dont au moins l'ossature comportant le coussin d'assise est constitué par une coque, c'est-à-dire par une feuille continue mise en forme, ladite coque étant de préférence réalisée par moulage d'une matière plastique, mais pouvant être réalisée différemment, par exemple par emboutissage d'une tôle en aluminium ou autre matériau.

Un tel siège a par exemple été décrit au brevet FR-A-2 120 277.

On sait l'intérêt que présentent de tels sièges par rapport à ceux à ossature discontinue en acier, notamment en ce qui concerne la légèreté, l'inaltérabilité et la simplicité du formage et du montage des coussins, vu qu'il est facile de donner directement à une coque une forme de baquet épousant l'anatomie d'une personne assise.

Mais dans les modes de réalisation connus des sièges du genre en question, les coques sont généralement formées d'un seul bloc et ne se prêtent donc pas au réglage de l'inclinaison du dossier. En effet, les articulations des dossiers à inclinaison réglable, dont un exemple a été donné au brevet US-A-2 430 604, font intervenir une forte concentration de charges et de contraintes au niveau de l'axe d'articulation : cet axe doit être matérialisé par un pivot ou organe analogue et les joues relativement minces des coques se prêtent mal à la constitution ou au support d'un tel organe, propre à encaisser lesdites charges et contraintes concentrées.

L'invention a donc pour but, surtout, de remédier à cet inconvénient en rendant possible un tel réglage d'inclinaison du dossier dans les sièges à ossature en coque considérés ci-dessus.

Par rapport à l'objet du brevet US-A-2 430 604 qui décrit déjà un siège comportant une ossature de dossier montée de façon pivotante sur l'ossature de l'assise autour d'un axe horizontal transversal X, ainsi qu'un mécanisme facilement actionnable par la personne assise sur le siège pour régler l'inclinaison dudit dossier autour dudit axe et pour bloquer ce dossier en chacune de ses différentes positions de réglage, le siège selon l'invention est essentiellement caractérisé en ce que l'ossature de l'assise est constituée par une coque, et en ce qu'il est prévu des éléments de glissière complémentaires s'étendant verticalement selon des secteurs centrés sur l'axe X et formés respectivement dans la partie transversale arrière de la coque d'assise et dans la base de l'ossature du dossier, éléments montés de façon à pouvoir glisser jointivement les uns contre les autres et à assurer à eux seuls le support et le guidage pivotant du dossier sur l'assise.

Dans des modes de réalisation préférés, on a recours en outre à l'une et/ou à l'autre des dispositions suivantes :

— l'axe X est situé à une hauteur de l'ordre de 12 à 15 cm au-dessus du point le plus bas de la zone médiane de la surface de portage du coussin d'assise et à une distance horizontale de l'ordre de 15 à 20 cm en avant de la base de la zone médiane de la surface de portage du coussin de dossier,

— l'ossature du dossier est aussi constituée par une coque,

— les éléments de glissière complémentaires sont des nervures faisant saillie respectivement sur les portions arrière de flasques verticaux délimitant latéralement la coque d'assise et sur des pattes verticales recourbées vers l'avant formant la base de l'ossature du dossier,

— les nervures ci-dessus font saillie respectivement sur les faces extérieures des flasques de l'assise et sur les faces intérieures des pattes du dossier,

— les pattes ci-dessus (ou les portions arrière des flasques ci-dessus) sont délimitées sur l'un au moins de leurs bords curvilignes par une tranche en arc de cercle centrée sur l'axe X, ladite tranche étant logée dans une gorge curviligne complémentaire faisant partie des portions arrière des flasques ci-dessus (ou faisant partie des pattes ci-dessus),

— les nervures ci-dessus sont constituées en matière plastique,

— les nervures correspondant à une ossature en coque sont venues de moulage avec cette coque,

— le mécanisme de réglage comprend au moins une crémaillère courbe centrée sur l'axe X et solidaire de l'ossature du dossier (ou de la coque d'assise) et un organe denté rotatif associé à une manette de commande facilement accessible de la personne assise sur le siège, organe porté par la coque d'assise (ou l'ossature du dossier) et propre à coagir avec ladite crémaillère,

— dans un siège selon l'alinéa précédent, le mécanisme de réglage comporte deux crémaillères courbes longeant respectivement les bords arrière des deux pattes comprises par l'ossature de dossier et deux organes dentés propres à coagir respectivement avec deux crémaillères et solidaires d'une même barre transversale portée par la coque d'assise et liée en rotation à une manette de commande accessible de la personne assise sur le siège.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin annexé d'une manière bien entendu non limitative.

La figure 1, de ce dessin, montre en vue perspective une ossature de siège de véhicule composée, selon l'invention, de deux « demi-coques » montrées ici séparées l'une de l'autre.

La figure 2 est une coupe partielle selon II-II, figure 1, de l'ensemble de ces deux demi-coques assemblées.

La figure 3 est une vue latérale de cet ensemble.

L'ossature du siège considéré est ici constituée, non pas d'une seule coque monobloc s'étendant de l'avant de l'assise au sommet du dossier du siège, mais de deux portions de coque distinctes correspondant respectivement à cette assise et à ce dossier, portions qui seront désignées dans la suite par l'expression « demi-coques » pour simplifier la description, bien qu'il ne s'agisse pas exactement de moitiés de coque.

Chacune de ces deux demi-coques est de préférence constituée en une matière plastique moulée qui est avantageusement une résine polyester armée de fibres de verre ou analogues.

La demi-coque d'assise 1 présente la forme générale d'une auge dont le fond 2 s'étend sensiblement selon une surface cylindrique d'axe horizontal transversal, la section verticale longitudinale de cette surface ayant la forme d'un S couché en ce sens que son bord arrière est relevé alors que son bord avant est au contraire rabattu vers l'avant. Les flancs latéraux de ladite auge sont constitués par des flasques verticaux 3.

La demi-coque de dossier 4 présente la forme générale d'un panneau 5 sensiblement vertical prolongé latéralement vers l'avant par deux joues verticales 6 d'allure triangulaire, ces joues étant plus larges à leur base qu'à leur sommet et étant prolongées elles-mêmes inférieurement par des pattes verticales 7 incurvées vers l'avant.

Ces pattes 7 sont délimitées antérieurement et postérieurement par des bords 8 et 9 s'étendant selon des arcs de cercle centrés sur un même axe X transversal, c'est-à-dire orienté selon la largeur du siège, axe sur la position duquel on reviendra plus loin.

Les plages arrière des flasques 3 et les pattes 7 sont munies d'éléments de glissière complémentaires s'étendant selon des arcs de cercle centrés sur l'axe X et propres à coulisser les uns le long des autres.

Ces éléments de glissière comportent des nervures circulaires 10 faisant saillie extérieurement (c'est-à-dire vers l'extérieur du siège) sur les flasques 3 et des nervures circulaires 11 faisant saillie intérieurement (c'est-à-dire vers l'intérieur du siège) sur les pattes 7.

Les nervures en question sont par exemple au nombre de deux pour chaque type, deux nervures 10 voisines délimitant entre elles une rainure 12 propre à recevoir jointivement l'une des nervures 11, et deux nervures 11 voisines délimitant entre elles une rainure 13 propre à recevoir jointivement l'une des nervures 10.

Les nombres, longueurs et sections des différentes nervures 10 et 11 en prise mutuelle sont choisis suffisants pour encaisser tous les efforts susceptibles d'être exercés sur le dossier aussi bien vers l'avant que vers l'arrière.

La section droite de chaque nervure 10 ou 11 est de préférence rectangulaire comme illustré.

Lesdites nervures sont avantageusement constituées en matière plastique. Elles peuvent venir de moulage directement avec les demi-coques correspondantes.

Mais il pourrait être avantageux, dans certains cas, de les constituer indépendamment de ces demi-coques, notamment en un matériau particulièrement résistant à l'usure et présentant un faible coefficient de frottement tel qu'une polyamide ou un PTFE, (polytétrafluoréthylène) les nervures étant alors rapportées sur les flasques ou pattes correspondants de toute manière désirable, par exemple par collage, soudure ou vissage.

Pour interdire tout déboîtement mutuel des nervures selon la direction transversale, on prévoit sur l'un au moins des deux éléments nervurés 3, 7 de chaque paire de tels éléments au moins une tranche circulaire centrée sur l'axe X et l'on prévoit sur l'autre élément une chape ou gorge circulaire coiffant jointivement ladite tranche.

Dans le mode de réalisation illustré :

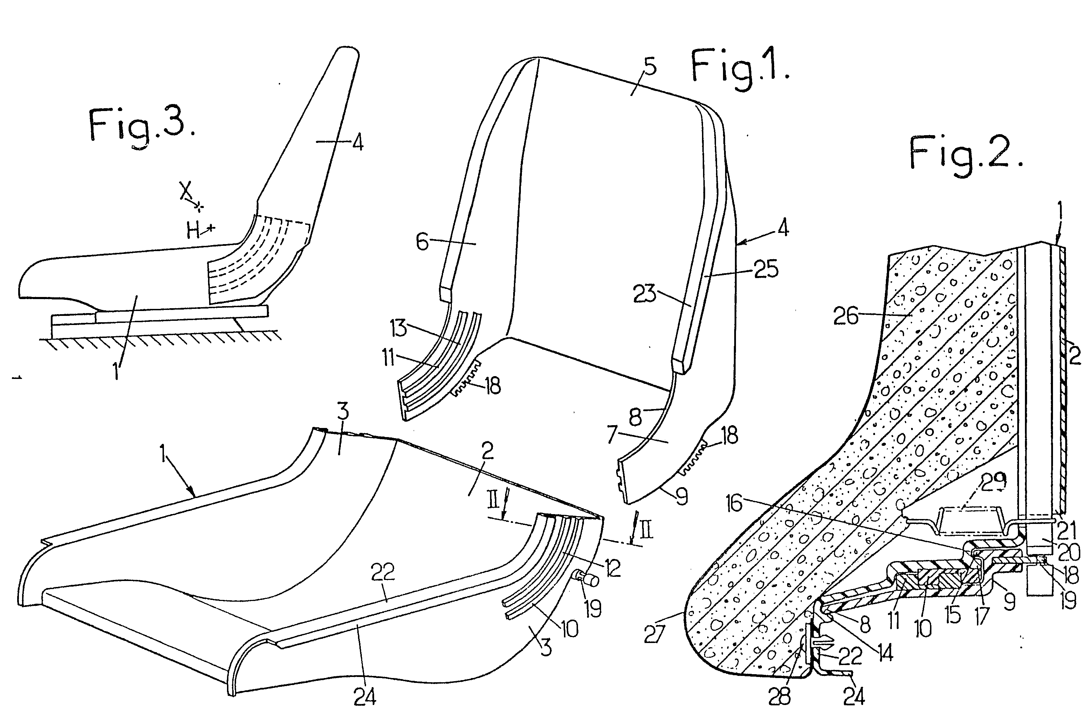

— une première telle tranche est constituée par le bord avant 8 de chaque patte 7, lequel est logé jointivement dans une gorge circulaire 14 (figure 2) réalisée par rabattement du bord du flasque 3 correspondant,

— une seconde telle tranche 15 est constituée par le talon inférieur arrière, de chaque patte 7, rabattu successivement vers l'intérieur du siège puis vers l'axe X, cette tranche 15 étant elle-même logée dans une seconde gorge 16 prévue extérieurement dans la zone inférieure arrière du flasque 3 correspondant.

Il est à noter que le talon rabattu 15 ci-dessus peut être lui-même considéré comme coiffant un bourrelet circulaire arrière 17 du flasque 3, comme bien visible sur la figure 2.

Le montage de la demi-coque de dossier sur la demi-coque d'assise est effectué en faisant d'abord coïncider les axes de leurs éléments de glissière circulaires respectifs, puis en introduisant « circulairement » les extrémités des pattes 7 dans les logements complémentaires des flasques 3, les différentes nervures étant ainsi introduites dans les rainures correspondantes et les tranches incurvées, dans les gorges qui leur sont destinées.

Si aucune butée intermédiaire n'est prévue, la demi-coque de dossier ainsi introduite dans la demi-coque d'assise vient, par gravité, occuper sa position inférieure d'enfoncement maximum, position correspondant à l'inclinaison maximum du dossier sur la verticale et au contact mutuel de certains tronçons des tranches inférieures des pattes 7 et/ou des tranches supérieures des flasques 3 avec des portées de fin de course correspondantes.

En réalité, cet enfoncement est limité à volonté à l'aide d'un mécanisme de réglage et de verrouillage qui va être décrit ci-après.

Ce réglage permet de modifier à volonté l'inclinaison du dossier du siège.

A cet effet, l'emplacement de l'axe X est prévu non pas relativement haut et loin en avant du dossier, comme s'il s'agissait du centre de courbure d'un arc de cercle passant respectivement par l'extrémité avant de l'assise, par le fond arrière de celle-ci et par le sommet du dossier.

Cet axe est situé au contraire relativement bas et en arrière, de préférence au voisinage de l'axe de pivotement H des hanches de l'usager du siège (voir figure 3).

A titre illustratif, ledit axe X est situé à une hauteur de l'ordre de 12 à 15 cm au-dessus du point le plus bas de la zone médiane de la surface de portage du coussin d'assise et à une distance horizontale de l'ordre de 15 à 20 cm en avant de la base de la zone médiane de la surface de portage du coussin de dossier.

Dans la pratique, cette mesure conduit à donner une valeur relativement faible, savoir d'une dizaine de centimètres seulement, aux rayons de courbure des bords supérieurs avant 8 et 14 des éléments courbes coulissants qui encadrent latéralement lesdits coussins.

Dans ces conditions, toute modification du degré d'enfoncement de la demi-coque de dossier dans la demi-coque d'assise, laquelle se traduit par une modification de l'inclinaison du dossier autour de cet axe X, correspond à une modification naturelle de l'inclinaison du dos de la présence assise et non pas à un simple raccourcissement ou allongement du dossier sans modification substantielle de son inclinaison d'ensemble.

Le mécanisme de réglage et de verrouillage considéré comprend :

— au moins une crémaillère 18 s'étendant selon un arc de cercle centré sur l'axe X et solidaire de l'une des demi-coques,

— un organe denté rotatif 19 porté par l'autre demi-coque et propre à coopérer avec la crémaillère 18, les rotations de cet organe étant commandées par une manette (non représentée) facilement accessible de la personne assise sur le siège,

— et des moyens pour bloquer cet organe denté 19 en une pluralité de ses positions angulaires correspondant à autant d'inclinaisons différentes du dossier.

Dans le mode de réalisation illustré, le nombre des crémaillères circulaires 18 est égal à deux et ces crémaillères sont constituées par des plaquettes métalliques découpées rapportées sur les bords inférieurs arrière des pattes 7 de façon que leurs dents soient orientées vers le bas et vers l'arrière, alors que les organes dentés 19, au nombre de deux également, sont solidaires d'une même barre rigide transversale 20 portée par la demi-coque d'assise 1, à l'arrière de celle-ci.

Les organes dentés 19 peuvent présenter toute forme désirable : c'est ainsi qu'ils peuvent être constitués par des pignons associés à des moyens de verrouillage angulaire.

Dans la construction illustrée, ces organes dentés 19 sont constitués chacun par deux pions cylindriques identiques d'axes parallèles à l'axe X et symétriques l'un de l'autre par rapport à l'axe de la barre 20, pions propres à coagir avec les dents des crémaillères 18.

De plus, la barre 20 est montée de façon à pouvoir rouler et glisser jointivement dans un bourrelet 21 de la demi-coque d'assise, bourrelet dont la section droite verticale longitudinale est allongée horizontalement et délimitée inférieurement et supérieurement par deux segments de droite parallèles, et des ressorts hélicoïdaux de tension 29 sont prévus pour solliciter constamment la barre 20 vers l'avant et vers le haut de façon à introduire les pions 19 au fond des encoches en regard des crémaillères correspondantes.

Dans ces conditions, au repos, tous les pions sont logés au fond de telles encoches et le mécanisme est verrouillé.

A partir d'une telle position de repos, les rotations de la barre 20 se traduisent par des pivotements successifs de 180° de cette barre autour de chacun des couples de pions coaxiaux situés de chaque côté du siège, ces couples constituant à tour de rôle des tourillons fixes de pivotement pour ladite barre : à chacun de ces pivotements successifs correspond un coulissement de la demi-coque de dossier vers le haut ou vers le bas, c'est-à-dire une réduction ou une augmentation de son inclinaison sur la verticale autour de l'axe X.

Ce mécanisme présente l'avantage d'assurer automatiquement un excellent verrouillage pour chacune de ses positions de réglage.

On voit encore sur les dessins :

— de larges rebords 22 et 23 prolongeant vers l'extérieur du siège respectivement les tranches supérieures des flasques 3 et les tranches antérieures des joues 6, les rebords en question présentant eux-mêmes de préférence des rabats terminaux 24 et 25 orientés respectivement vers le bas et vers le haut, ces rebords et rabats contribuant à la fois au renforcement mécanique des demi-coques et au confort général du siège,

— un coussin en mousse 26 (figure 2) garnissant la demi-coque d'assise 1 dudit siège, coussin lui-même revêtu d'une coiffe 27,

— et une attache élastique 28, partiellement noyée dans la mousse, propre à fixer une marge de la coiffe 27 sur l'un des rebords 22.

L'invention ne se limite nullement à ses modes d'application et de réalisation qui ont été plus spécialement envisagés ; elle embrasse, en outre, notamment les variantes où l'ossature du dossier ne serait pas constituée par une coque, mais par exemple par une ossature tubulaire métallique soudée sur deux goussets métalliques nervurés propres à coagir avec les portions arrière nervurées des flasques latéraux de la coque d'assise.

**Revendications**

1. Siège de véhicule dont l'ossature du dossier (4) est montée de façon pivotante sur l'ossature de l'assise (1) autour d'un axe horizontal transversal (X), comprenant un mécanisme facilement actionnable par la personne assise sur le siège pour régler l'inclinaison dudit dossier autour dudit axe et pour bloquer ce dossier en chacune de ses différentes positions de réglage, caractérisé en ce que l'ossature de l'assise est constituée par une coque, et en ce qu'il est prévu des éléments de glissière complémentaires (10-13) s'étendant verticalement selon des secteurs centrés sur l'axe (X) et formés respectivement dans la partie transversale arrière de la coque d'assise et dans la base de l'ossature du dossier, éléments montés de façon à pouvoir glisser jointivement les uns contre les autres et à assurer à eux seuls le support et le guidage pivotant du dossier sur l'assise.

2. Siège selon la revendication 1, caractérisé en l'axe (X) est situé à une hauteur de l'ordre de 12 à 15 cm au-dessus du point le plus bas de la zone médiane de la surface de portage du coussin d'assise et à une distance horizontale de l'ordre de 15 à 20 cm en avant de la base de la zone médiane de la surface de portage du coussin de dossier.

3. Siège selon l'une quelconque des revendications 1 et 2, caractérisé en ce que l'ossature du dossier est aussi constituée par une coque (4).

4. Siège selon l'une quelconque des précédentes revendications, caractérisé en ce que les éléments de glissière complémentaires sont des nervures (10, 11) faisant saillie respectivement sur les portions arrière de flasques verticaux (3) délimitant latéralement la coque d'assise et sur des pattes verticales (7) recourbées vers l'avant formant la base de l'ossature du dossier.

5. Siège selon la revendication 4, caractérisé en ce que les nervures (10, 11) font saillie respectivement sur les faces extérieures des flasques (3) de l'assise et sur les faces intérieures des pattes (7) du dossier.

6. Siège selon l'une quelconque des revendications 4 et 5, caractérisé en ce que les pattes (7) — ou les portions arrière des flasques (3) — sont délimitées sur l'un au moins de leurs bords curvilignes par une tranche en arc de cercle (8) centrée sur l'axe X, ladite tranche étant logée dans une gorge curviligne complémentaire (14) faisant partie des portions arrière des flasques (3) — ou faisant partie des pattes (7).

7. Siège selon l'une quelconque des revendications 4 à 6, caractérisé en ce que les nervures sont constituées en matière plastique.

8. Siège selon l'une quelconque des précédentes revendications, caractérisé en ce que les nervures correspondant à une ossature en coque sont venues de moulage avec cette coque.

9. Siège selon l'une quelconque des précédentes revendications, caractérisé en ce que le mécanisme de réglage comprend au moins une crémaillère courbe (18) centrée sur l'axe X et solidaire de l'ossature du dossier (ou de la coque d'assise) et un organe denté rotatif (19) associé à une manette de commande facilement accessible de la personne assise sur le siège, organe porté par la coque d'assise (ou l'ossature du dossier) et propre à coagir avec ladite crémaillère.

10. Siège selon les revendications 4 et 9, caractérisé en ce que le mécanisme de réglage comporte deux crémaillères courbes longeant respectivement les bords arrière des deux pattes comprises par l'ossature du dossier et deux organes dentés propres à coagir respectivement avec ces deux crémaillères et solidaires d'une même barre transversale (20) portée par la coque d'assise et liée en rotation à une manette de commande accessible de la personne assise sur le siège.

**Claims**

1. Vehicle seat whose seat back frame (4) is pivotally mounted on the sitting portion frame (1) around an horizontal transverse axis (X), comprising a mechanism easily operable by the person sitting in the seat for adjusting the inclination of said seat back around said axis and for locking said seat back in each of its different asjustment positions, characterized in that the sitting portion frame is formed by a shell and in that complementary slide elements (10-13) are provided, extending vertically along circular arcs centered on the axis (X) and carried respectively by the rear part of the sitting portion shell and by the base of the seat back frame, said elements being mounted so as to be jointly slidable along each other and to perform by themselves alone the support and the pivotal guiding of the back seat on the sitting portion.

2. Seat according to claim 1, characterized in that the axis (X) is situated at a height of the order of 12 to 15 cm above the lowest point of the median zone of the bearing surface of the sitting portion cushion and at ahorizontal distance of the order of 15 to 20 cm in front of the base of the median zone of the bearing surface of the seat back cushion.

3. Seat according to anyone of the claims 1 and 2, characterized on that the frame of the seat back is also formed by a shell (4).

4. Seat according to anyone of the preceding claims, characterized in that the complementary slide elements are ribs (10, 11) projecting respectively on the rear parts of vertical flanges (3) delimiting laterally the sitting portion shell and on forwardly bent vertical lugs forming the base of the seat back frame.

5. Seat according to claim 4, characterized in that the ribs (10, 11) project respectively on the outer faces of the flanges (3) of the sitting portion and on the inner faces of the lugs (7) of the seat back.

6. Seat according to anyone of the claims 4 and 5, characterized in that the lugs (7) — or the rear parts of the flanges (3) — are delimited on one at least of their curvilinear edges by an edge extending along an arc of a circle centered on the axis X, said edge being housed in a complementary curvilinear groove (14) formed in the rear parts of the flanges (3) — or in the lugs (7).

7. Seat according to anyone of the claims 4 to 6, characterized in that the ribs are made of a plastic material.

8. Seat according to anyone of the preceding claims, characterized in that the ribs corresponding to a shell frame are integrally molded with said shell.

9. Seat according to anyone of the preceding claims, characterized in that the adjustment mechanism comprises at least one arcuated rack (18) centered on the axis X and fixed on the seat back frame (or on the sitting portion shell) and a toothed rotatable member or gear associated to a control handle easily accessible to the person sitting in the seat, which member is carried by the sitting portion shell (or by the seat back frame) and is adapted to cooperate with said rack.

10. Seat according to claims 4 and 9, characterized in that the adjustment mechanism comprises two arcuated racks extending respectively along the rear edges of the two lugs comprised by the seat back frame and two gears adapted to cooperate respectively with said two racks and rigidly interconnected with a same transverse bar (20) carried by the sitting portion shell and angularly connected to a control handle accessible to the person sitting in the seat.

**Ansprüche**

1. Fahrzeugsitz, dessen Rückenlehnengestell (4) um eine waagerechte, quer verlaufende Achse (X) schwenkbar an dem Gestell des Sitzteils (1) angebracht ist, und der einen leicht durch die auf dem Sitz befindliche Person zu betätigenden Mechanismus zum Einstellen der Neigung der Rückenlehne um die Achse (X) und zum Blockieren der verschiedenen einregulierten Stellungen enthält, dadurch gekennzeichnet, daß das Gestell des Sitzteiles aus einer Schale besteht und daß komplementäre Gleitelemente (10-13) vorgesehen sind, die sich in senkrechter Richtung längs Kreisabschnitten erstrecken, die auf die Achse (X) zentriert sind und jeweils in dem hinteren quer verlaufenden Abschnitt der Sitzschale und im unteren Teil des Gestells der Rückenlehne ausgebildet sind, wobei die Gleitelemente so angebracht sind, daß sie aneinander anliegend aufeinander gleiten und für sich allein die Abstützung und Führung beim Verschwenken der Rückenlehne an dem Sitzteil sicherstellen können.

2. Fahrzeugsitz nach Anspruch 1, dadurch gekennzeichnet, daß die Achse (X) in einer Höhe von etwa 12-15 cm oberhalb des tiefsten Punktes der mittleren Zone der Auflagefläche des Polsters des Sitzteiles und in einem waagerechten Abstand von 15-20 cm vor der Basis der mittleren Zone der Auflagefläche des Polsters der Rückenlehne liegt.

3. Fahrzeugsitz nach einem der Ansprüche 1 und 2, dadurch gekennzeichnet, daß das Gestell der Rückenlehne ebenfalls aus einer Schale (4) besteht.

4. Fahrzeugsitz nach einem der vorhergehenden Ansprüche, dadurch gekennzeichnet, daß die komplementären Gleitelemente aus Rippen (10, 11) bestehen, die jeweils an den hinteren Abschnitten der senkrechten Flansche (3), die die Schale des Sitzteiles seitlich begrenzen, sowie an senkrechten Laschen (7) vorstehen, die kurvenförmig nach vorne verlaufen und die Basis oder den unteren Teil des Gestells der Rückenlehne bilden.

5. Fahrzeugsitz nach Anspruch 4, dadurch gekennzeichnet, daß die Rippen (10, 11) jeweils an den Außenflächen der Flansche (3) des Sitzteiles und an den Innenflächen der Laschen (7) der Rückenlehne vorstehen.

6. Fahrzeugsitz nach einem der Ansprüche 4 und 5, dadurch gekennzeichnet, daß die Laschen (7) oder die hinteren Abschnitte der Flansche (3) an wenigstens einem der kurvenförmigen Ränder durch einen halbkreisförmigen Abschnitt (8), der auf die Achse (X) zentriert ist, begrenzt sind, wobei der Abschnitt in einer kurvenförmigen komplementären Rinne (14) angeordnet ist, die ein Teil der hinteren Abschnitte der Flansche (3) oder ein Teil der Laschen (7) ist.

7. Fahrzeugsitz nach einem der Ansprüche 4 bis 6, dadurch gekennzeichnet, daß die Rippen aus Kunststoff bestehen.

8. Fahrzeugsitz nach einem der vorhergehenden Ansprüche, dadurch gekennzeichnet, daß die Rippen eines aus einer Schale bestehenden Gestells durch Verformung zusammen mit der Schale hergestellt sind.

9. Fahrzeugsitz nach einem der vorhergehenden Ansprüche, dadurch gekennzeichnet, daß der Mechanismus zum Einstellen der Neigung der Rückenlehne wenigstens eine kurvenförmige Zahnstange (18), die auf die Achse (X) zentriert und fest mit dem Gestell der Rückenlehne (oder dem der Sitzschale) verbunden ist und ein mit einer Zahnung versehenes drehbares Teil (19) enthält, das mit einem Handhebel verbunden ist, der von der auf dem Sitz befindlichen Person leicht zugänglich ist, wobei das Drehteil an der Sitzschale (oder an dem Gestell der Rückenlehne) angebracht ist und mit der Zahnstange zusammenwirkt.

10. Fahrzeugsitz nach einem der Ansprüche 4 und 9, dadurch gekennzeichnet, daß der Mechanismus zum Einstellen der Neigung aus zwei kurvenförmigen Zahnstangen, die sich jeweils an den hinteren Kanten der beiden Laschen des Gestells der Rückenlehne erstrecken und aus zwei jeweils mit einer Zahnung versehenen Teilen bestehen, die mit den beiden Zahnstangen zusammenwirken und an einer gemeinsamen quer verlaufenden Stange (20) angebracht sind, die an der Schale des Sitzteiles gehalten wird und drehbar mit einem Handhebel verbunden ist, der für die auf dem Sitz befindliche Person zugänglich ist.

0 029 763

Fig.1.

Fig.2.

Fig.3.